# EUROPÄISCHE PATENTSCHRIFT

(11) **EP 1 419 330 B1**
(45) Veröffentlichungstag und Bekanntmachung des Hinweises auf die Patenterteilung: **05.01.2005**
(21) Anmeldenummer: 02754544.1
(22) Anmeldetag: 19.08.2002
(51) Int. Cl.: F16K 1/22, F02D 9/10

(54) **DROSSELKLAPPENSTUTZEN FÜR EINEN VERBRENNUNGSMOTOR**
BUTTERFLY VALVE CONNECTION PIECE FOR AN INTERNAL COMBUSTION ENGINE
TUBULURE DE PAPILLON DES GAZ POUR UN MOTEUR A COMBUSTION INTERNE

(30) Priorität: 23.08.2001 DE 10140394
(43) Veröffentlichungstag der Anmeldung: 19.05.2004
(73) Patentinhaber: Siemens Aktiengesellschaft, 80333 München (DE)
(72) Erfinder: KOHLEN, Peter, 61267 Neu-Anspach (DE); OPPERMANN, Rolf, 65824 Schwalbach (DE)
(86) Internationale Anmeldenummer: PCT/DE2002/003039
(87) Internationale Veröffentlichungsnummer: WO 2003/019053

(56) Entgegenhaltungen:
- EP-A- 0 899 073
- WO-A-97/04259
- DE-A- 4 323 078
- DE-A- 4 408 909
- DE-A- 19 508 355
- DE-C- 4 235 825
- US-A- 4 047 696
- US-A- 4 944 490
- US-A- 5 669 350
- PATENT ABSTRACTS OF JAPAN vol. 1997, no. 11, 28. November 1997 (1997-11-28) & JP 09 195803 A (NISSAN MOTOR CO LTD), 29. Juli 1997 (1997-07-29)

## Beschreibung

Die Erfindung bezieht sich auf einen Drosselklappenstutzen für einen Verbrennungsmotor, mit einem Gehäuse oder einem zylindrisches Einsatzteil für das Gehäuse , mit einer Durchströmöffnung des Gehäuses oder des Einsatzteils, in der eine Drosselklappe um eine sich quer zur Längsachse der Durchströmöffnung erstreckende Schwenkachse schwenkbar angeordnet ist, durch die die Durchströmöffnung absperrbar ist, wobei die Drosselklappe in ihrer Schließstellung um einen bestimmten Anstellwinkel zur Längsachse der Durchströmöffnung geneigt mit ihrem radial umlaufenden Rand an der Innenwand der Durchströmöffnung in Anlage und die Durchströmöffnung zumindest im Anlagebereich der Drosselklappe zylindrisch und daran beidseitig anschließend sich jeweils konisch erweiternd ausgebildet ist wobei der zylindrisch zur Längsachse der Durchströmöffnung ausgebildete Anlagebereich einen beidseitig unter einem Winkel abgeschnittenen Kreiszylinder bildet.

Ein derartiger Drosselklappenstutzen ist aus dem Dokument DE 195 083 55 bekannt.

Um insbesondere nahe der Schließstellung genau definierbare Durchströmquerschnitte im Bereich der Drosselklappe zu erhalten und um ein einwandfreies Schließen in der Schließstellung zu gewährleisten, ist die Durchströmöffnung des Drosselklappenstutzens im Anlagebereich der Drosselklappe zylindrisch ausgebildet. Da die Drosselklappe in ihrer Schließstellung um den Anstellwinkel zur Längsachse der Durchströmöffnung geneigt ist, erstreckt sich dieser Bereich zylindrischen Querschnitts über die gesamte Länge, die von der in Schließstellung befindlichen Drosselklappe abgedeckt wird. Diese Länge von etwa 7 bis 10 mm ist zu groß, als daß sie mit einem einzigen zylindrischen Kern herstellbar wäre, da dann keine Entformung ohne Beschädigung der zylindrischen Wand durch Riefen möglich ist.

Um eine beschädigungsfreie Entformung zu erreichen, werden zwei Kerne verwandt, deren einander zugewandte Endbereiche zylindrisch sind und zum Spritzvorgang aneinander zur Anlage gelangen.

Dies führt aber dazu, daß an dieser Anlagestelle der beiden Kerne ein Formungsgrad sowie toleranzbedingt auch ein axialer Versatz entsteht, was nach dem Entformen eine Nachbearbeitung erfordert, da es sonst zu einem Verklemmen der Drosselklappe in ihrer Schließstellung kommen kann.

Aufgabe der Erfindung ist es daher einen Drosselklappenstutzen und ein Verfahren zur Herstellung eines Gehäuses oder Einsatzteils eines Gehäuses eines Drosselklappenstutzens der eingangs genannten Art zu schaffen, die auf einfache Weise eine versatz- und nachbearbeitungsfreie zylindrische Durchströmöffnung im Anlagebereich der Drosselklappe ermöglichen.

Diese Aufgabe wird erfindungsgemäß dadurch gelöst, daß dessen Schnittebenen unter dem im Wesentlichen gleichen Anstellwinkel zur Längsachse der Durchströmöffnung geneigt sind, wie die in Schließstellung befindliche Drosselklappe, so dass die Schnittebenen zur Längsachse der Durchströmöffnung geneigt sind.

Bei einem derartig ausgebildeten Drosselklappenstutzen ist die erforderliche kreiszylindrische Innenkontur der Durchströmöffnung nur dort vorhanden, wo sie zur Sicherstellung des einwandfreien Schließens in der Schließstellung der Drosselklappe erforderlich ist, indem der zylindrische Bereich entsprechend dem Anstellwinkel der Drosselklappe zur Längsachse der Durchtrittsöffnung in der Schließstellung geneigt ist. Damit kann die zylindrisch ausgebildete Längserstreckung des Anlagebereichs derart gering ausgebildet werden, daß sie mit einem einzigen zylindrischen Kern ohne Versatz und ohne Riefen und Formungsgradbildung herstellbar und entformbar ist.
Ein derartig hergestellter Drosselklappenstutzen kann vorzugsweise bei sog. E-Gas-Systemen zur Anwendung kommen. Es sind genauso gut aber auch andere Anwendungen wie z.B. bei Abgasrückführsystemen möglich.

Vorzugsweise kann dabei die zylindrisch ausgebildete Längserstreckung des Anlagebereichs entlang seiner umlaufenden Kontur etwa gleich oder um wenige zehntel Millimeter größer als die Dicke der Drosselklappe sein. Dies bedeutet, daß entgegen der bisher üblichen zylindrischen Länge von etwa 7 bis 10 mm nur noch eine zylindrische Länge von etwa 3 mm erforderlich ist.

Nach dem erfindungsgemäßen Verfahren werden in eine äußere Gehäuseform zur Erzeugung der Durchtrittsöffnung ein erster Kern und ein zweiter Kern koaxial zueinander angeordnet, die mit ihren einander zugewandten Stirnflächen aneinander zur Anlage gebracht und durch Spritzgießen umspritzt werden, die aneinander anliegenden Stirnflächen des ersten und zweiten Kerns sind unter zumindest etwa den gleichen Winkel zur Längsachse der Kerne geneigt, wie der Anstellwinkel der Drosselklappe und der erste Kern weist von seiner Anlagefläche am zweiten Kern ausgehend einen Bereich auf, der ein beidseitig unter diesem Winkel abgeschnittener Kreiszylinderbereich ist, wobei die sich an den Kreiszylinderbereich anschließenden Bereiche des ersten und des zweiten Kerns einen größeren Querschnitt aufweisen, als der Kreiszylinderbereich.

Bei der Entformung werden die Kerne axial voneinander wegbewegt, was aufgrund der geringen Länge des kreiszylindrischen Bereichs ohne Riefenbildung erfolgt. Ein Versatz im kreiszylindrischen Bereich ist nicht möglich, da dieser mit einem einzigen zylindrischen Kernteil hergestellt wird. Eine Beseitigung eines Formungsgrades ist nicht erforderlich, da dieser sich außerhalb des zylindrischen Anlagebereichs der Drosselklappe befindet.

Eine leichte Entformung wird weiterhin dadurch noch unterstützt, daß die sich an dem abgeschnittenen Kreiszylinderbereich anschließenden Bereiche des ersten und/oder des zweiten Kerns einen ausgehend vom Kreiszylinderbereich konisch sich erweiternden Querschnitt aufweisen. Das Gehäuse oder der zylindrische Einsatz für das Gehäuse des Drosselklappenstutzens können dadurch hergestellt werden, daß die Kerne mit Aluminium umspritzt werden.

Es ist aber auch möglich, daß die Kerne mit einem Kunststoff umspritzt werden, der vorzugsweise ein Thermoplast oder ein Duroplast ist.

Ein Ausführungsbeispiel der Erfindung ist in der Zeichnung dargestellt und wird im folgenden näher beschrieben. Es zeigen
- Figur 1: einen Drosselklappenstutzen im Querschnitt
- Figur 2: das Gehäuse des Drosselklappenstutzens nach Figur 1 im Querschnitt mit einem ersten und einem zwei ten im Abstand zueinander befindlichen Kern.

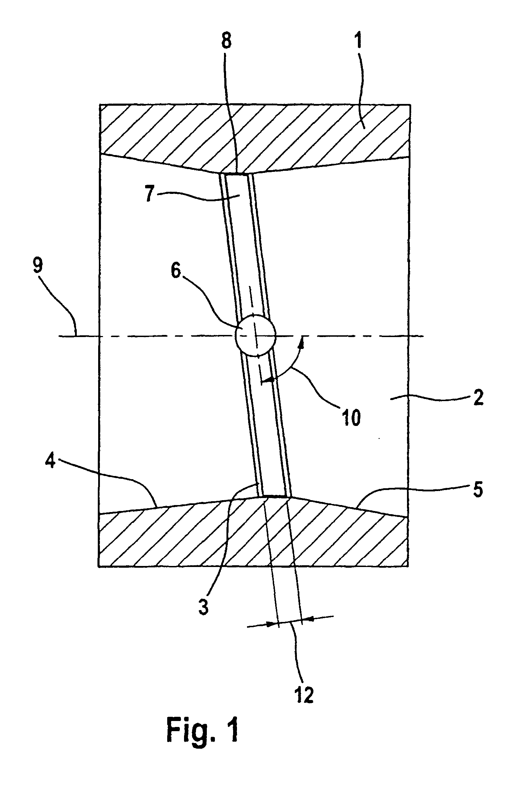

Der in Figur 1 dargestellte Drosselklappenstutzen weist ein Gehäuse 1 mit einer Durchströmöffnung 2 auf, die in ihrem mittleren Bereich durch einen beidseitig unter einem Winkel abgeschnittenen Kreiszylinder 3 gebildet ist.

Die sich an die beiden Enden des unter einem Winkel abgeschnittenen Kreiszylinders 3 anschließenden Bereiche 4 und 5 der Durchströmöffnung 2 sind jeweils vom Kreiszylinder 3 aus sich konisch erweiternd ausgebildet.

Mittig zum unter einem Winkel abgeschnittenen Kreiszylinder 3 durchragt diesen eine Drosselklappenwelle 6, auf der eine Drosselklappe 7 angeordnet ist. Die Drosselklappe 7 ist in ihrer Schließposition dargestellt, in der sie mit ihrem radial umlaufenden Rand 8 an der Innenwand der Durchströmöffnung 2 in Anlage ist und deren Durchgang völlig abschließt.

Gegenüber der Längsachse 9 der Durchströmöffnung 2 ist die Drosselklappe 7 in der Schließposition um einen Anstellwinkel 10 geneigt. Die Längserstreckung 11 des Kreiszylinders 3 ist nur um wenige zehntel Millimeter größer als die Breite 12 der Drosselklappe 7.

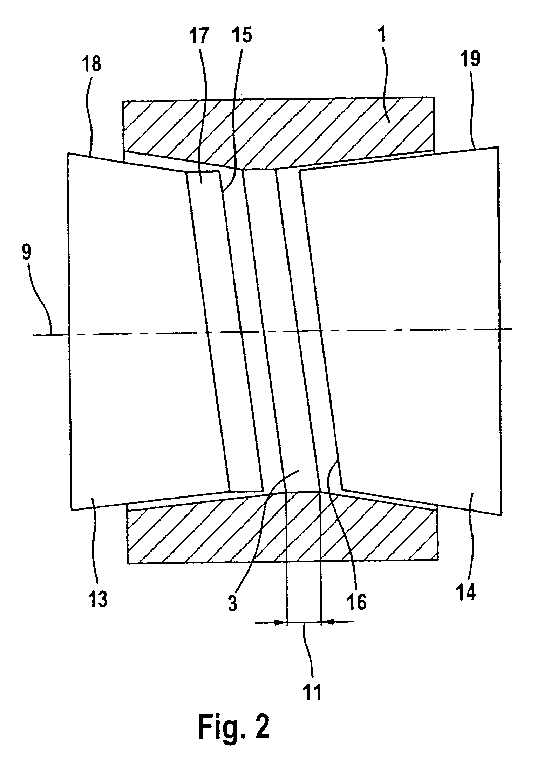

In Figur 2 sind in der Durchgangsöffnung 2 des Gehäuses 1 ein erster Kern 13 und ein zweiter Kern 14 koaxial zueinander angeordnet. Beide Kerne 13 und 14 sind auf einen Abstand voneinander wegbewegt dargestellt.

Zur Herstellung des Gehäuses 1 sind die beiden Kerne 13 und 14 mit ihren einander zugewandten Stirnflächen 15 und 16 aneinander in Anlage.

Die beiden Stirnflächen 15 und 16 sind unter einem Winkel zur Längsachse 9 geneigt, der dem Anstellwinkel 10 der Drosselklappe 7 entspricht.

Von der Stirnfläche 15 ausgehend erstreckt sich ein Bereich des ersten Kerns 13, der ein beidseitig unter dem Winkel abgeschnittener Kreiszylinderbereich 17 ist, unter dem auch die Stirnfläche 15 gegenüber der Längsachse 9 geneigt ist. Diesem kreiszylindrischen Bereich 17 schließt sich ein sich konisch erweiternder Bereich 18 des ersten Kerns 13 an.

Der zweite Kern 14 besteht vollständig aus einem Bereich 19, der sich ausgehend von der Stirnfläche 16 konisch erweitert.

## Patentansprüche

1. Drosselklappenstutzen für einen Verbrennungsmotor, mit einem Gehäuse oder einem zylindrischen Einsatzteil für das Gehäuse, mit einer Durchströmöffnung des Gehäuses oder des Einsatzteils, in der eine Drosselklappe um eine sich quer zur Längsachse der Durchströmöffnung erstreckende Schwenkachse schwenkbar angeordnet ist, durch die die Durchströmöffnung absperrbar ist, wobei die Drosselklappe in ihrer Schließstellung um einen bestimmten Anstellwinkel zur Längsachse der Durchströmöffnung geneigt mit ihrem radial umlaufenden Rand an der Innenwand der Durchströmöffnung in Anlage und die Durchströmöffnung zumindest im Anlagebereich der Drosselklappe zylindrisch und daran beidseitig anschließend sich jeweils konisch erweiternd ausgebildet ist, wobei der zylindrisch zur Längsachse (9) der Durchströmöffnung (2) ausgebildete Anlagebereich einen beidseitig unter einem Winkel abgeschnittenen Kreiszylinder (3) bildet, **dadurch gekennzeichnet, dass** dessen Schnittebenen unter dem im Wesentlichen gleichen Anstellwinkel (10) zur Längsachse (9) der Durchströmöffnung (2) geneigt sind, wie die in Schließstellung befindliche Drosselklappe (7), so dass die Schnittebenen zur Längsachse (9) der Durchströmöffnung (2) geneigt sind.

2. Drosselklappenstutzen nach Anspruch 1, **dadurch gekennzeichnet, dass** die zylindrisch ausgebildete Längserstreckung (11) des Anlagebereichs entlang seiner umlaufenden Kontur etwa gleich oder um wenige zehntel Millimeter größer als die Dicke (12) der Drosselklappe (7) ist.

3. Verfahren zur Herstellung eines Gehäuses oder eines Einsatzes für ein Gehäuse eines Drosselklappenstutzens mit den Merkmalen der Ansprüche 1 und 2, **dadurch gekennzeichnet, daß** in eine äußere Gehäuseform zur Erzeugung der Durchströmöffnung (2) ein erster Kern (13) und ein zweiter Kern (14) koaxial zueinander angeordnet werden, die mit ihren einander zugewandten Stirnflächen (15, 16) aneinander zur Anlage gebracht und durch Spritzgießen umspritzt werden, daß die aneinander anliegenden Stirnflächen (15, 16) des ersten und zweiten Kerns (13, 14) unter zumindest etwa dem gleichen Winkel zur Längsachse (9) der Kerne (13, 14) geneigt sind wie der Anstellwinkel (10) der Drosselklappe (7) und der erste (13) Kern von seiner Anlagefläche (15) am zweiten Kern (14) ausgehend einen Bereich aufweist, der ein beidseitig unter diesem Winkel abgeschnittener Kreiszylinderbereich (17) ist und daß die sich an den Kreiszylinderbereich (17) anschließenden Bereiche (18, 19) des ersten und des zweiten Kerns (13, 14) einen größeren Querschnitt aufweisen, als der Kreiszylinderbereich (17).

4. Verfahren nach Anspruch 3, **dadurch gekennzeichnet, daß** die sich an den abgeschnittenen Kreiszylinderbereich (17) anschließenden Bereiche (18, 19) des ersten und/oder des zweiten Kerns (13, 14) einen ausgehend vom Kreiszylinderbereich (17) konisch sich erweiternden Querschnitt aufweisen.

5. Verfahren nach einem der Ansprüche 3 und 4, **dadurch gekennzeichnet, daß** die Kerne (13, 14) mit Aluminium umspritzt werden.

6. Verfahren nach einem der Ansprüche 3 und 4, **dadurch gekennzeichnet, daß** die Kerne (13, 14) mit einem Kunststoff umspritzt werden.

7. Verfahren nach Anspruch 6, **dadurch gekennzeichnet, daß** die Kerne (13, 14) mit einem Thermoplast oder einem Duroplast umspritzt werden.

## Claims

1. Butterfly valve connection piece for an internal combustion engine, having a housing or a cylindrical insert part for the housing, having a throughflow opening of the housing or of the insert part, in which throughflow opening a butterfly valve is arranged so as to be pivotable about a pivot axis extending transversely to the longitudinal axis of the throughflow opening, by means of which butterfly valve. the throughflow opening can be shut off, the butterfly valve, in its closed position, being inclined by a certain setting angle relative to the longitudinal axis of the throughflow opening and bearing with its radially encircling edge against the inner wall of the throughflow opening, and the throughflow opening being of cylindrical design at least in the bearing region of the butterfly valve and being formed adjacent to said bearing region on both sides in such a way as to widen conically in each case, wherein the bearing region designed to be cylindrical relative to the longitudinal axis (9) of the throughflow opening (2) forms a circular cylinder (3) which is truncated on both sides at an angle, **characterized in that** its cutting planes are inclined relative to the longitudinal axis (9) of the throughflow opening (2) at essentially the same setting angle (10) as the butterfly valve (7) located in the closed position, so that the cutting planes are inclined relative to the longitudinal axis (9) of the throughflow opening (2).

2. Butterfly valve connection piece according to Claim 1, **characterized in that** the cylindrically designed longitudinal extent (11) of the bearing region along its encircling contour is approximately equal to the thickness (12) of the butterfly valve (7) or is greater than said thickness (12) by a few tenths of a millimetre.

3. Method of producing a housing or an insert part for a housing of a butterfly valve connection piece having the features of Claims 1 and 2, **characterized in that** a first core (13) and a second core (14) are arranged coaxially to one another in an outer housing mould for producing the throughflow opening (2), which first and second cores (13, 14), with their end faces (15, 16) which face one another, are brought to bear against one another and are encapsulated by die-casting/injection moulding, **in that** the end faces (15, 16), bearing against one another, of the first and second cores (13, 14) are inclined relative to the longitudinal axis (9) of the cores (13, 14) at at least approximately the same angle as the setting angle (10) of the butterfly valve (7), and the first core (13), starting from its surface (15) bearing against the second core (14), has a region which is a circular cylinder region (17) truncated on both sides at this angle, and **in that** those regions (18, 19) of the first and second cores (13, 14) which adjoin the circular cylinder region (17) have a greater cross section than the circular cylinder region (17).

4. Method as claimed in Claim 3, **characterized in that** those regions (18, 19) of the first and/or of the second core (13, 14) which adjoin the truncated circular cylinder region (17) have a conically widening cross section starting from the circular cylinder region (17).

5. Method as claimed in either of Claims 3 or 4, **characterized in that** the cores (13, 14) are encapsulated with aluminium.

6. Method as claimed in either of Claims 3 or 4, **characterized in that** the cores (13, 14) are encapsulated with a plastic.

7. Method as claimed in Claim 6, **characterized in that** the cores (13, 14) are encapsulated with a thermoplastic or a thermosetting plastic.

## Revendications

1. Corps de papillon des gaz pour un moteur à combustion interne, comportant un boîtier ou un élément rapporté cylindrique pour le boîtier, et comportant une ouverture d'écoulement du boîtier ou de l'élément rapporté dans laquelle est disposé, à pivotement autour d'un axe de pivotement s'étendant transversalement à l'axe longitudinal de l'ouverture d'écoulement, un papillon qui permet de fermer l'ouverture d'écoulement, le papillon étant, dans sa position fermée, appliqué par son bord radialement périphérique contre la paroi intérieure de l'ouverture d'écoulement en étant incliné suivant un angle d'incidence donné par rapport à l'axe longitudinal de l'ouverture d'écoulement, et l'ouverture d'écoulement étant réalisée cylindrique au moins dans la région d'application du papillon puis en s'élargissant respectivement coniquement de p art et d'autre d e cette région cylindrique, la région d'application, réalisée cylindrique relativement à l'axe (9) longitudinal de l'ouverture (2) d'écoulement, formant un cylindre (3) circulaire coupé suivant un angle aux deux extrémités, **caractérisé en ce que** les plans de coupe du cylindre (3) circulaire sont inclinés sensiblement suivant le même angle (10) d'incidence, par rapport à l'axe (9) longitudinal de l'ouverture (2) d'écoulement, que le papillon (7) se trouvant en position fermée, de sorte que les plans de coupe sont inclinés par rapport à l'axe (9) longitudinal de l'ouverture (2) d'écoulement.

2. Corps de papillon des gaz suivant la revendication 1, **caractérisé en ce que** l'étendue (11) longitudinale réalisée cylindrique de la région d'application le long de son contour périphérique est d'une taille approximativement identique ou supérieure de quelques dixièmes de millimètres à l'épaisseur (12) du papillon (7).

3. Procédé de fabrication d'un boîtier ou d'un élément rapporté pour un boîtier d'un corps de papillon des gaz ayant les caractéristiques des revendications 1 et 2, **caractérisé en ce qu'**un premier noyau (13) et un deuxième noyau (14) sont disposés coaxialement l'un par rapport à l'autre dans un moule de boîtier extérieur afin de produire l'ouverture (2) d'écoulement, noyaux qui sont amenés en application mutuelle par leurs faces (15, 16) terminales tournées l'une vers l'autre et qui sont enrobés par injection, **en ce que** les faces (15, 16) terminales en application mutuelle du premier noyau (13) et du deuxième noyau (14) sont inclinées suivant au moins approximativement le même angle, par rapport à l'axe (9) longitudinal des noyaux (13, 14), que l'angle (10) d'incidence du papillon (7), et le premier noyau (13) comporte, en partant de sa face (15) d'application contre le deuxième noyau (14), une région qui est une région (17) en forme de cylindre circulaire coupé aux deux extrémités suivant cet angle, et **en ce que** les régions (18, 19) des premier et deuxième noyaux (13, 14) qui se raccordent à la région (17) en forme de cylindre circulaire possèdent une plus grande section que la région (17) en forme de cylindre circulaire.

4. Procédé suivant la revendication 3, **caractérisé en ce que** les régions (18, 19) des premier et/ou deuxième noyaux (13, 14) qui se raccordent à la région (17) en forme de cylindre circulaire coupé possèdent une section s'élargissant coniquement en partant de la région (17) en forme de cylindre circulaire.

5. Procédé suivant l'une des revendications 3 et 4 , **caractérisé en ce que** les noyaux (13, 14) sont enrobés par injection d'aluminium.

6. Procédé suivant l'une des revendications 3 et 4, **caractérisé en ce que** les noyaux (13, 14) sont enrobés par injection d'une matière plastique.

7. Procédé suivant la revendication 6, **caractérisé en ce que** les noyaux (13, 14) sont enrobés par injection d'une matière thermoplastique ou thermodurcissable.
